# EUROPEAN PATENT APPLICATION

(11) **EP 3 269 927 A1**
(43) Date of publication of application: **17.01.2018**
(21) Application number: 17176370.9
(22) Date of filing: 16.06.2017
(51) Int. Cl.: F01D 5/16, F01D 5/30

(54) **A ROTOR ASSEMBLY FOR A TURBOMACHINE AND A METHOD OF MANUFACTURING THE SAME**

(30) Priority: 15.07.2016 GB 201612288
(71) Applicant: Rolls-Royce plc, London SW1E 6AT (GB)
(72) Inventor: Chung, Jae-Hoon, Derby, Derbyshire DE24 8BJ (GB)
(74) Representative: Rolls-Royce plc

(57) **Abstract**

A rotor assembly (100) for a turbomachine (10) comprises a hub (110), a plurality of first blades (120), and a plurality of second blades (130). The hub (110) comprises an axis of rotation, a first face (114) and an opposite second face (116), with each of the first face and the second face being normal to the axis of rotation. Each of the first blades comprises a first blade root portion (122), and each of the second blades comprises a second blade root portion (132). The hub comprises a plurality of first blade root slots (140) and a plurality of second blade root slots (150). An axial separation between the first face and the second face defines a blade root slot axial length (141). Each of the first blade root slots is positioned at a first radius (142) from the axis of rotation at the first face, and each of the second blade root slots is positioned at a second radius (152) from the axis of rotation at the second face. The first radius increases monotonically along the blade root slot axial length from the first face to the second face.

Respective ones of the first blade root slots (140) and second blade root slots (150) are arranged in an alternating sequence circumferentially around the axis of rotation. Respective ones of the plurality of first blade root portions (122) are accommodated in corresponding ones of the first blade root slots (140), and respective ones of the plurality of second blade root portions (132= are accommodated in corresponding ones of the second blade root slots (150).

## Description

### Field of the Disclosure

The present disclosure relates to a rotor assembly for a turbomachine and particularly, but not exclusively, to a rotor assembly for a gas turbine turbofan engine, together with a method assembling the same.

### Background to the Disclosure

Gas turbine engines are used to power aircraft, watercraft, power generators, pumps, and the like. Gas turbine engines operate by compressing atmospheric air, burning fuel with the compressed air, and then removing work from hot high-pressure air produced by combustion of the fuel in the air. Rows of rotating blades and non-rotating vanes are used to compress the air and then to extract work from the high-enthalpy air produced by combustion. Each blade and vane has an airfoil that interacts with the gasses as they pass through the engine.

Airfoils have natural vibration modes of increasing frequency and complexity of the mode shape. The simplest and lowest frequency modes are typically referred to as the first bending mode, the second bending mode, the third bending mode, and the first torsion mode. The first bending mode is a motion normal to the working surface of an airfoil in which the entire span of the airfoil moves in the same direction. The second bending mode is similar to the first bending mode, but with a change in the sense of the motion somewhere along the span of the airfoil, so that the upper and lower portions of the airfoil move in opposite directions. The third bending mode is similar to the second bending mode, but with two changes in the sense of the motion somewhere along the span of the airfoil. The first torsion mode is a twisting motion predominantly along the span of the aerofoil, on each side of the elastic axis, moves in the same direction.

Blades are subject to destructive vibrations induced by unsteady interaction of the airfoils of those blades with gasses passing through a gas turbine engine. One type of vibration is known as flutter, which is an aero-elastic instability resulting from the interaction of the flow over the airfoils of the blades and the blades' natural vibration tendencies. The lowest frequency vibration modes, the first bending mode and the first torsion mode, are often the vibration modes that are susceptible to flutter. When flutter occurs, the unsteady aerodynamic forces on the blade, due to its vibration, add energy to the vibration, causing the vibration amplitude to increase. The vibration amplitude can become large enough to cause damage to a blade. Another type of vibration is known as forced response, which is an aero-elastic response to inlet distortion or wakes from upstream airfoils, struts, or any other flow obstruction. The operable range, in terms of pressure rise and flow rate, of turbomachinery can sometimes be restricted by flutter or forced response phenomena.

The specific susceptibility of a blade to flutter may be increased if all the blades on a rotor are identical in terms of their vibration frequencies. Sometimes, intentional variations may be introduced into blades during manufacturing to create structural mistuning of a rotor and provide flutter resistance.

### Statements of Disclosure

According to a first aspect of the present disclosure there is provided a rotor assembly for a turbomachine, the rotor comprising:
a hub, the hub comprising:
   an axis of rotation;
   a first face and an opposite second face, each of the first face and the second face being normal to the axis of rotation;
a plurality of first blades, each of the first blades comprising a first blade root portion; and
a plurality of second blades, each of the second blades comprising a second blade root portion,
wherein the hub further comprises a plurality of first blade root slots and a plurality of second blade root slots, an axial separation between the first face and the second face defining a respective blade root slot axial length, each of the first blade root slots being positioned at a first radius from the axis of rotation at the first face, and each of the second blade root slots being positioned at a second radius from the axis of rotation at the first face, the first radius increases monotonically along the first blade root slot axial length from the first face to the second face, the first radius being different to the second radius at at least one of the first face and the second face,
respective ones of the first blade root slots and second blade root slots being arranged in an alternating sequence circumferentially around the axis of rotation, respective ones of the plurality of first blade root portions being accommodated in corresponding ones of the first blade root slots, and respective ones of the plurality of second blade root portions being accommodated in corresponding ones of the second blade root slots.

By positioning alternate ones of the blade root slots at an angle to the axis of rotation, the rotor assembly can be intentionally de-tuned to improve the stability margin, so taking it away from normal operation of the rotor assembly.

This alternating angled blade root slot arrangement results in more than one set of blades with each of the sets of blades having different mean root heights. This difference in mean root height results in each of the blade sets having a different centre gravity. It is the different centre of gravity between adjacent blades that results in the de-tuning of the rotor assembly.

The arrangement of alternating blade root slot angle requires no change to the annulus line and throat area for the rotor assembly. This means that the aerodynamic efficiency of the rotor assembly is not adversely affected by the mis-tuning effect of the angled blade root slot arrangement, which in turn makes the arrangement convenient for a user.

Optionally, the second radius decreases monotonically along the second blade root slot axial length from the first face to the second face.

In this arrangement, each of the first blade root slots is angled with the first radius increasing monotonically along the blade root slot from the first face to the second face, while each of the second blade root slots is angled with the second radius decreasing monotonically along the blade root slot from the first face to the second face.

In this arrangement, the blade root slots are angled relative to an axis of rotation of the rotor assembly with adjacent ones of the blade root slots being angled in opposing senses. In other words, adjacent ones of the blade root slots alternately slope inwardly and outwardly along an axis of rotation of the rotor assembly from one end of the rotor assembly to the other.

By angling each blade root slot in an opposite sense to its neighbouring blade root slot, each first blade will have a different centre of gravity to the adjacent second blade. This difference in centre of gravity enables the above-mentioned mis-tuning of the rotor assembly.

Optionally, each of the first blades has a first blade tip portion, each of the second blades has a second blade tip portion, and wherein the plurality of first blade tip portions and second blade tip portions together define a tip circumference.

The alternating angled blade root slot arrangement requires that the root portions of the alternating blades be of different height to one another. However, when the blades are assembled into the rotor assembly, the outer diameter swept by all of the blades is a contiguous circle. This maintains the aerodynamic efficiency of the rotor assembly.

Optionally, at least one of the first blade root slots, and at least one of the second blade root slots, has a pyriform cross-sectional profile extending radially inwardly into the hub.

In one arrangement, each of the blade root slots is formed with a female pyriform cross-sectional profile. In other words, each blade root slot has a female pear-shaped cross-section extending radially inwardly into the hub of the rotor assembly. The blade root slot width increases as the slot depth increases from an outer surface of the hub.

In this arrangement, each of the blades has a corresponding pyriform cross-sectional profile with a width of the blade root portion increasing as it gets closer to the end of the blade root portion. The pyriform cross-sectional profile of the blade root portion corresponds to the pyriform cross-sectional profile of the blade root slot such that the blade is accommodated within the blade root slot.

The pyriform cross-sectional profile of the blade root slot and the corresponding blade root portion provides for effective load transfer between the blade and the hub, while being straightforward to manufacture.

Optionally, at least one of the first blade root slots, and at least one of the second blade root slots, has a fir-tree cross-sectional profile extending radially inwardly into the hub.

The use of a fir tree cross-sectional profile for the blade root slot and the corresponding blade root portion may provide for an increased area of contact between the blade and the hub. This can increase the amount of force that can be transmitted across the blade root joint. Thus a blade root joint that employs a fir tree root geometry may be able to be operated at higher rotational speeds.

According to a second aspect of the present disclosure there is provided a method of manufacturing a rotor assembly, the method comprising the steps of:
providing a hub, the hub comprising an axis of rotation, a first face and an opposite second face, each of the first face and the second face being normal to the axis of rotation;
forming a plurality of alternate first blade root slots and second blade root slots in the hub, the first blade root slots and the second blade root slots being arranged in a circumferential array, the axial separation between the first face and the second face defining a respective blade root slot axial length, each of the first blade root slots being positioned at a first radius from the axis of rotation at the first face, each of the second blade root slots being positioned at a second radius from the axis of rotation at the first face, and the first radius increasing monotonically along the first blade root slot axial length from the first face to the second face, the first radius being different to the second radius at at least one of the first face and the second face;
positioning a plurality of first blades in the hub, with a first blade root portion of each first blade being located in a corresponding one of the first blade root slots;
positioning a plurality of second blades in the hub, with a second blade root portion of each second blade being located in a corresponding one of the second blade root slots.

By positioning alternate ones of the blade root slots at an angle to the axis of rotation, the rotor assembly can be intentionally de-tuned to improve the stability margin, so taking it away from normal operation of the rotor assembly.

This alternating angled blade root slot arrangement results in more than one set of blades with each of the sets of blades having different mean root heights. This difference in mean root height results in each of the blade sets having a different centre gravity. It is the different centre of gravity between adjacent blades that results in the de-tuning of the rotor assembly.

The arrangement of alternating blade root slot angle requires no change to the annulus line and throat area for the rotor assembly. This means that the aerodynamic efficiency of the rotor assembly is not adversely affected by the mis-tuning effect of the angled blade root slot arrangement, which in turn makes the arrangement convenient for a user.

Optionally, the step of forming a plurality of alternate first blade root slots and second blade root slots, arranged in a circumferential array, the axial separation between the first face and the second face defining a respective blade root slot axial length, each of the first blade root slots being positioned at a first radius from the axis of rotation at the first face, each of the second blade root slots being positioned at a second radius from the axis of rotation at the first face, and the first radius increasing monotonically along the first blade root slot axial length from the first face to the second face, comprises the step of:
forming a plurality of alternate first blade root slots and second blade root slots, arranged in a circumferential array, the axial separation between the first face and the second face defining a respective blade root slot axial length, each of the first blade root slots being positioned at a first radius from the axis of rotation at the first face, each of the second blade root slots being positioned at a second radius from the axis of rotation at the first face, the first radius increasing monotonically along the first blade root slot axial length from the first face to the second face, and the second radius decreasing monotonically along the first blade root slot axial length from the first face to the second face.

In this arrangement, each of the first blade root slots is angled with the first radius increasing monotonically along the blade root slot from the first face to the second face, while each of the second blade root slots is angled with the second radius decreasing monotonically along the blade root slot from the first face to the second face.

In this arrangement, the blade root slots are angled relative to an axis of rotation of the rotor assembly with adjacent ones of the blade root slots being angled in opposing senses. In other words, adjacent ones of the blade root slots alternately slope inwardly and outwardly along an axis of rotation of the rotor assembly from one end of the rotor assembly to the other.

By angling each blade root slot in an opposite sense to its neighbouring blade root slot, each first blade will have a different centre of gravity to the adjacent second blade. This difference in centre of gravity enables the above-mentioned mis-tuning of the rotor assembly.

Other aspects of the disclosure provide devices, methods and systems which include and/or implement some or all of the actions described herein. The illustrative aspects of the disclosure are designed to solve one or more of the problems herein described and/or one or more other problems not discussed.

### Brief Description of the Drawings

There now follows a description of an embodiment of the disclosure, by way of nonlimiting example, with reference being made to the accompanying drawings in which:
Figure 1 shows a schematic sectional view of a turbofan engine embodying the rotor assembly according to the present disclosure;
Figure 2 shows a schematic sectional end view of a rotor assembly according to an embodiment of the present disclosure;
Figure 3 shows a schematic view on A-A of the rotor assembly of Figure 2;
Figure 4 shows a schematic view on B-B of the rotor assembly of Figure 2;
Figure 5 shows a sectional view of the blade root portion and blade root slot joint of the rotor assembly of Figure 2, having a pyriform cross-sectional profile; and
Figure 6 shows a sectional view of the blade root portion and blade root slot joint of the rotor assembly of Figure 2, having a fir tree cross-sectional profile.

It is noted that the drawings may not be to scale. The drawings are intended to depict only typical aspects of the disclosure, and therefore should not be considered as limiting the scope of the disclosure. In the drawings, like numbering represents like elements between the drawings.

### Detailed Description

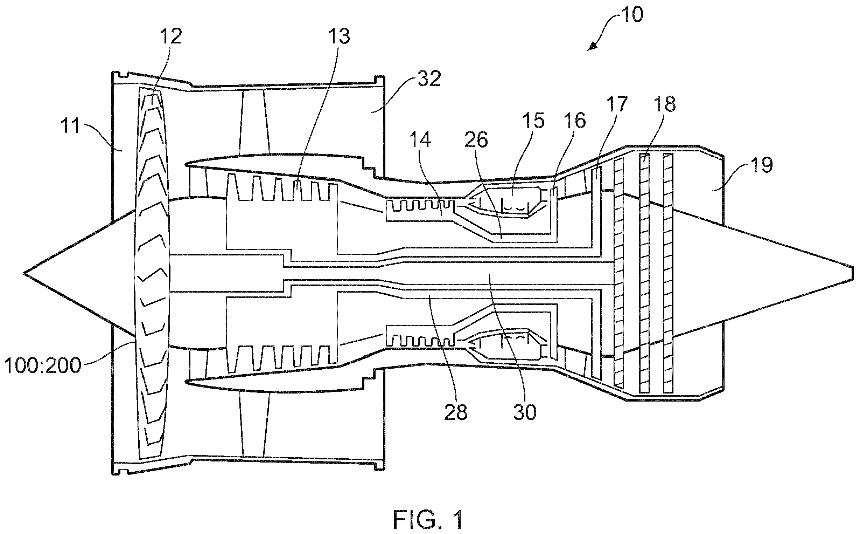

A turbofan gas turbine engine 10, as shown in figure 1, comprises in flow series an intake 11, a fan 12, an intermediate pressure compressor 13, a high pressure compressor 14, a combustion chamber 15, a high pressure turbine 16, an intermediate pressure turbine 17, a low pressure turbine 18 and an exhaust 19. The high pressure turbine 16 is arranged to drive the high pressure compressor 14 via a first shaft 26. The intermediate pressure turbine 17 is arranged to drive the intermediate pressure compressor 13 via a second shaft 28 and the low pressure turbine 18 is arranged to drive the fan 12 via a third shaft 30. In operation air flows into the intake 11 and is compressed by the fan 12. A first portion of the air flows through, and is compressed by, the intermediate pressure compressor 13 and the high pressure compressor 14 and is supplied to the combustion chamber 15. Fuel is injected into the combustion chamber 15 and is burnt in the air to produce hot exhaust gases which flow through, and drive, the high pressure turbine 16, the intermediate pressure turbine 17 and the low pressure turbine 18. The hot exhaust gases leaving the low pressure turbine 18 flow through the exhaust 19 to provide propulsive thrust. A second portion of the air bypasses the main engine via the bypass duct 32 to provide propulsive thrust.

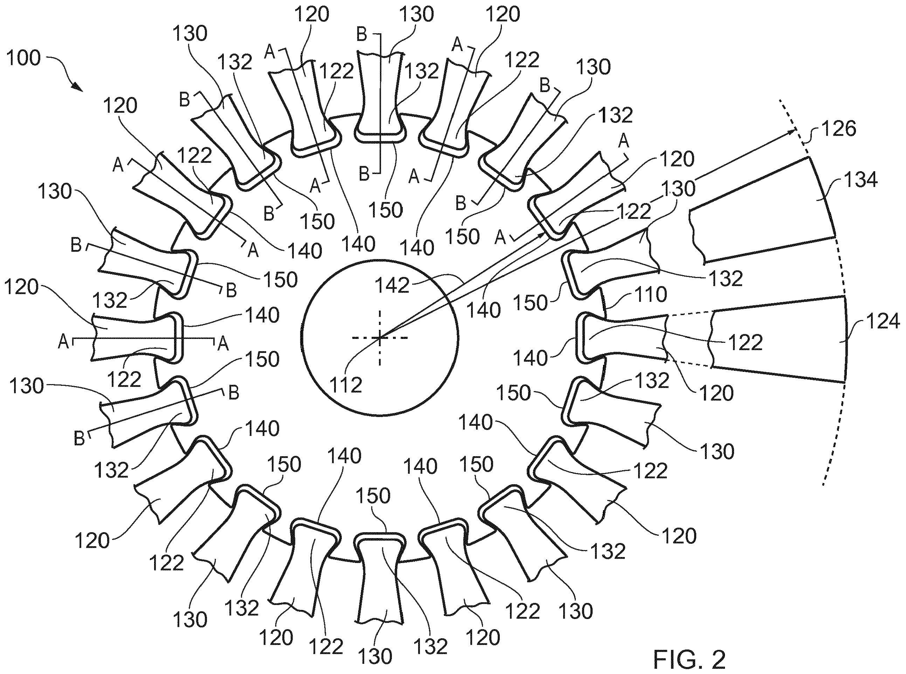

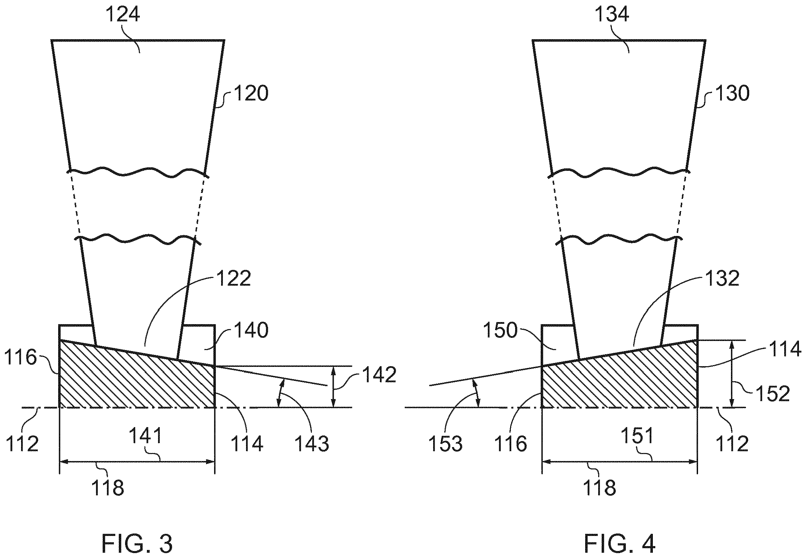

Referring to Figures 2 to 5, a rotor assembly according to an embodiment of the disclosure is designated generally by the reference numeral 100.

The rotor assembly 100 comprises a hub 110, a plurality of first blades 120, and a plurality of second blades 130. Each of the first blades 120 comprises a first blade root portion 122. Each of the second blades 130 comprises a second blade root portion 132.

The hub 110 comprises a plurality of first blade root slots 140 and a plurality of second blade root slots 150 arranged in a circumferential array around an axis of rotation 112 of the hub 110.

The hub 110 further comprises a first face 114 and an opposite second face 116. An axial separation 118 between the first face 114 and the second face 116 defines a respective blade root slot axial length 141,151. In other words, each of the first blade root slots 140 has a first blade root slot axial length 141, and each of the second blade root slots 150 has a second blade root slot axial length 151.

Each of the plurality of first blade root portions 122 is accommodated within a respective one of the first blade root slots 140. Each of the plurality of second blade root portions 132 is accommodated within a corresponding one of the second blade root slots 150.

Each of the first blade root slots 140 is positioned at a first blade root slot radius 142 from the axis of rotation 112 at the first face 114. Each of the second blade root slots 150 is positioned at a second blade root slot radius 152 from the axis of rotation 112 at the first face 114.

In the embodiment shown in the figures, the first radius 142 increases monotonically along the first blade root slot axial length 141 in a direction extending from the first face 114 to the second face 116. In addition, the second radius 152 decreases monotonically along the second blade root slot axial length 151 in a direction extending from the first face 114 to the second face 116. In other words, the circumferential array of first and second blade root slots 140,150 comprises an alternating sequence of sloped blade root slots 140,150, with adjacent blade root slots 140,150 being sloped in an opposite sense to each other.

In an alternative arrangement, each of the first blade root slots 140 may be angled as outlined above, whilst each of the second blade root slots 150 may be parallel to the axis of rotation 112.

Respective ones of the first blade root slots 140 and second blade root slots 150 are arranged in an alternating sequence circumferentially around the axis of rotation 112. Respective ones of the plurality of first blade root portions 122 are accommodated in corresponding ones of the first blade root slots 140, and respective ones of the plurality of second blade root portions 132 are accommodated in corresponding ones of the second blade root slots 150.

Each of the first and second blades 120:130 has a respective blade tip portion 124:134. For each of the first and second blades 120:130, the corresponding blade tip portion 124:134 is positioned radially outwardly of the respective blade root portion 122:132. The plurality of blade tip portions 124:134 together define a blade tip circumference 126.

Each of the first blade root slots 140 is angled at a first blade root slot angle 143 to the axis of rotation 112, and each of the second blade root slots 150 is angled at a second blade root slot angle 153 to the axis of rotation 112. In one arrangement, the first blade root slot angle 143 is 3°, and the second blade root slot angle 153 is 3°. In other embodiments of the disclosure, the first blade root slot angle 143 and the second blade root slot angle 153 may be other than 3°. In further arrangements, the first blade root slot angle 143 may be different to the second blade root slot angle 153.

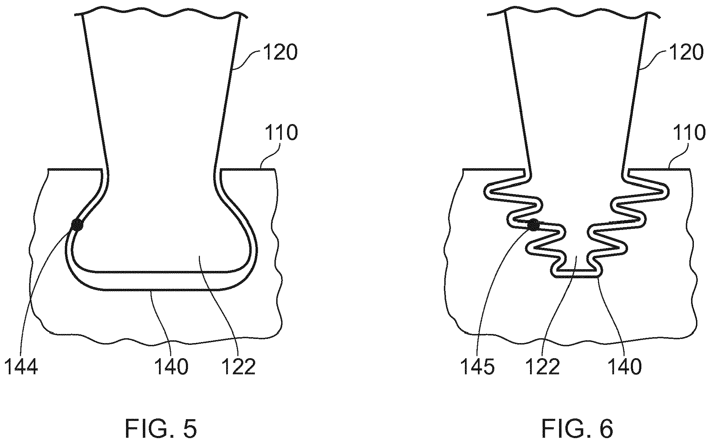

In the embodiment shown in Figure 2, each of the first blade root slots 140 and the second blade root slots 150 has a pyriform cross-sectional profile 144. In other words, the cross-sectional profile is pear-shaped, with a circumferential width of the slot 140:150 decreasing with increasing radius from the axis of rotation 112. This cross-sectional profile 144 is alternatively referred to as a 'dovetail' cross-sectional profile, despite having rounded radially innermost corners. This pyriform cross-sectional profile 144 is shown in more detail at Figure 5.

Referring to Figure 6, an alternative form of cross-sectional profile for the joint between the first and second blade root portions 122:132 and the corresponding first and second blade root slots 140:150, is a fir-tree profile 145. The fir-tree profile 145 shown in Figure 6 has four lobes on each side of the blade root portion 122:132. In alternative forms of the fir-tree cross-sectional profile 145, the corresponding blade root portion 122:132 may have two or more lobes on each side.

Except where mutually exclusive, any of the features may be employed separately or in combination with any other features and the disclosure extends to and includes all combinations and sub-combinations of one or more features described herein.

The foregoing description of various aspects of the disclosure has been presented for purposes of illustration and description. It is not intended to be exhaustive or to limit the disclosure to the precise form disclosed, and obviously, many modifications and variations are possible. Such modifications and variations that may be apparent to a person of skill in the art are included within the scope of the disclosure as defined by the accompanying claims.

## Claims

1. A rotor assembly for a turbomachine, the rotor comprising:
a hub, the hub comprising:
an axis of rotation;
a first face and an opposite second face, each of the first face and the second face being normal to the axis of rotation;
a plurality of first blades, each of the first blades comprising a first blade root portion; and
a plurality of second blades, each of the second blades comprising a second blade root portion,
wherein the hub further comprises a plurality of first blade root slots and a plurality of second blade root slots, an axial separation between the first face and the second face defining a respective blade root slot axial length, each of the first blade root slots being positioned at a first radius from the axis of rotation at the first face, and each of the second blade root slots being positioned at a second radius from the axis of rotation at the first face, the first radius increases monotonically along the first blade root slot axial length from the first face to the second face, the first radius being different to the second radius at at least one of the first face and the second face,
respective ones of the first blade root slots and second blade root slots are arranged in an alternating sequence circumferentially around the axis of rotation, respective ones of the plurality of first blade root portions are accommodated in corresponding ones of the first blade root slots, and respective ones of the plurality of second blade root portions are accommodated in corresponding ones of the second blade root slots.

2. The rotor assembly as claimed in Claim 1, wherein the second radius decreases monotonically along the second blade root slot axial length from the first face to the second face.

3. The rotor assembly as claimed in Claim 1, wherein each of the first blades has a first blade tip portion, each of the second blades has a second blade tip portion, and wherein the plurality of first blade tip portions and second blade tip portions together define a tip circumference.

4. The rotor assembly as claimed in Claim 1, wherein at least one of the first blade root slots, and at least one of the second blade root slots, has a pyriform cross-sectional profile extending radially inwardly into the hub.

5. The rotor assembly as claimed in Claim 1, wherein at least one of the first blade root slots, and at least one of the second blade root slots, has a fir-tree cross-sectional profile extending radially inwardly into the hub.

6. A method of manufacturing a rotor assembly, the method comprising the steps of:
providing a hub, the hub comprising an axis of rotation, a first face, and an opposite second face, each of the first face and the second face being normal to the axis of rotation;
forming a plurality of alternate first blade root slots and second blade root slots in the hub, the first blade root slots and the second blade root slots being arranged in a circumferential array, the axial separation between the first face and the second face defining a respective blade root slot axial length, each of the first blade root slots being positioned at a first radius from the axis of rotation at the first face, each of the second blade root slots being positioned at a second radius from the axis of rotation at the first face, and the first radius increasing monotonically along the first blade root slot axial length from the first face to the second face, the first radius being different to the second radius at at least one of the first face and the second face;
positioning a plurality of first blades in the hub, with a first blade root portion of each first blade being located in a corresponding one of the first blade root slots;
positioning a plurality of second blades in the hub, with a second blade root portion of each second blade being located in a corresponding one of the second blade root slots.

7. The method as claimed in Claim 6, wherein the step of forming a plurality of alternate first blade root slots and second blade root slots, arranged in a circumferential array, the axial separation between the first face and the second face defining a respective blade root slot axial length, each of the first blade root slots being positioned at a first radius from the axis of rotation at the first face, each of the second blade root slots being positioned at a second radius from the axis of rotation at the first face, and the first radius increasing monotonically along the first blade root slot axial length from the first face to the second face, comprises the step of:
forming a plurality of alternate first blade root slots, and second blade root slots, arranged in a circumferential array, the axial separation between the first face and the second face defining a respective blade root slot axial length, each of the first blade root slots being positioned at a first radius from the axis of rotation at the first face, each of the second blade root slots being positioned at a second radius from the axis of rotation at the first face, the first radius increasing monotonically along the first blade root slot axial length from the first face to the second face and the second radius decreasing monotonically along the second blade root slot axial length from the first face to the second face.
